# EUROPÄISCHE PATENTSCHRIFT

(11) **EP 2 190 885 B1**
(45) Veröffentlichungstag und Bekanntmachung des Hinweises auf die Patenterteilung: **08.06.2011**
(21) Anmeldenummer: 08801310.7
(22) Anmeldetag: 09.09.2008
(51) Int. Cl.: C08F 2/36, C08F 255/02, C08F 255/04, C08L 23/04, C08L 51/06, C09J 151/06

(54) **VERFAHREN ZUR HERSTELLUNG CARBOXYLIERTER ETHYLENPOLYMERBLENDS**
METHOD FOR PRODUCING CARBOXYLATED ETHYLENE POLYMER BLENDS
PROCÉDÉ DE PRODUCTION DE MÉLANGES DE POLYMÈRES D'ÉTHYLÈNE CARBOXYLÉS

(30) Priorität: 11.09.2007 DE 102007043972
(43) Veröffentlichungstag der Anmeldung: 02.06.2010
(73) Patentinhaber: Dow Global Technologies LLC, Midland, MI 48674 (US)
(72) Erfinder: BESSER, Klaus, 06193 Gutenberg (DE); GERECKE, Jochen, 06122 Halle/Saale (DE); HÄUSSLER, Lutz, 06108 Halle/Saale (DE); LEITNER, Bianka, 06258 Schkopau (DE); RAPTHEL, Inno, 06120 Halle (DE)
(74) Vertreter: Hayes, Adrian Chetwynd
(86) Internationale Anmeldenummer: PCT/DE2008/001506
(87) Internationale Veröffentlichungsnummer: WO 2009/033465

(56) Entgegenhaltungen:
- EP-A- 0 519 617
- EP-A- 1 298 168
- DE-A1- 4 123 972
- US-A- 5 643 997

## Beschreibung

Die Erfindung betrifft ein Verfahren zur Herstellung carboxylierter Ethylenpolymerblends, zusammengesetzt aus mindestens zwei verschiedenen Ethylenhomo- und/oder -copolymeren, in zwei Stufen und ihre Verwendung als Haftvermittler in Kunststoff-Metall-Verbunden.

Für zahlreiche Anwendungen, insbesondere als Verträglichkeits- bzw. Haftvermittler (Klebemittel), erfolgt der Einsatz von carboxylierten Olefinpolymeren auf Basis von Polyethylenen unterschiedlicher Dichte (LDPE, MDPE, HDPE), Ethylen/α,β-ethylenisch ungesättigten C₃- bis C₁₂-Olefin-Copolymeren (LLDPE, POE) oder auch von Propylenhomo- (HPP) sowie statistischen(Random) und heterophasigen Propylencopolymeren (RCP, HCP), Ethylen/Propylen-Copolymeren (EPC) oder Ethylen/Propylen/Dien-Terpolymeren (EPDM), die im Allgemeinen mittels reaktiver Extrusion bei hohen Temperaturen (150-300 °C) durch Pfropfung eines carboxylgruppenhaltigen Monomers, wie Acrylsäure, Fumarsäure und besonders Maleinsäureanhydrid, auf das olefinische Rückgratpolymer in Gegenwart eines Radikale bildenden peroxidischen Initiators hergestellt werden (WO 91/18053, US 4.174.358, US 4.537.929, US 4.684.576, US 4.751.270, US 4.927.888, EP 0266221 B1, EP 0287140 B1, EP 0403109 A2, EP 0467178 B1, EP 0581360 B1, EP 0696303 B1, EP 0878510 B1).

Während die bei niedrigeren Reaktionstemperaturen, d. h. unterhalb des Schmelzpunkts des olefinischen Rückgratpolymers (Pfropfsubstrats) durchgeführte Pfropfcarboxylierung, vorzugsweise -maleinierung, in einem Lösemittel auf Grund der technologisch sehr aufwendigen Polymer-Auflösung und vor allem der nach erfolgter Pfropfreaktion notwendigen Lösemittelabtrennung und -rückgewinnung sowie der erforderlichen Pfropfprodukt-Reinigung keine wirtschaftliche Alternative zur Schmelze-Pfropfung von Säure(anhydrid)monomeren ist, basiert die in fest-fluider partikulärer Polymerphase durchgeführte Carboxylierung von Olefinpolymeren auf einer unterhalb der Schmelz- bzw. der Erweichungstemperatur des Pfropfsubstrates durchgeführten wirtschaftlichen Technologie (DD 275160 A3, DD 275161 A3, DD 300977 A7, DE 4123972 A1, DE 4342605 A1, EP 0469693 B1).

Dafür besonders geeignete Rückgratpolymere sind teilkristalline Olefinpolymere, die in der sich zwischen ihrem Glas- und Schmelzpunkt ausbildenden amorphen Phase hohe Diffusionsgeschwindigkeiten für niedermolekulare Verbindungen wie Säure- bzw. Anhydridmonomere, eine der Voraussetzungen für ihre hohen Pfropfpolymerisationsgeschwindigkeiten, erlauben.

Amorphe sowie niedrig-kristalline Olefinelastomere mit spezieller Morphologie sind als Polymerrückgrat für die freie radikalische Festphasen-Pfropfmodifizierung unter bestimmten Polymerisationsbedingungen auch verwendbar (EP 0642538 B1, EP 0805827 B1), ohne aber die für eine Verwendung als hochwirksame Haftvermittler, insbesondere für anspruchsvolle Metall/Kunststoff-Verbunde, erforderlichen Eigenschaften zu erreichen.

Zu den möglichen Haftvermittlern zählen neben carboxylierten (maleinierten) Polyethylenen mit hoher Dichte (HDPE) oder verzweigten Polyethylenen mit niedriger Dichte (LDPE) vor allem auch carboxylierte lineare Ethylencopolymere mit niedriger Dichte, entweder mit einem niedrigen C₃- bis C₁₂-Olefin-Comonomeranteil unterhalb 15 Masse-% (LLDPE) oder mit höherem C₃- bis C₁₂-Olefin-Comonomeranteil (oberhalb 15 Masse-%, POE), insbesondere Ethylen/Octen(C₈)-Copolymere (EOC), sowie auch aus überwiegend Propyleneinheiten bestehenden Random-Propylen/EthylenCopolymere, die zwecks ihrer Carboxylierung ausschließlich durch Schmelze-Pfropfung - bevorzugt unter Verwendung von MSA als Pfropfagens - hergestellt (US 5.346.963, US 6.384.139 B1, US 6.331.592 B1, US 6.884.850 B1; DE 198 41 303 A1, WO 01/92357A1, WO 98/42760 A1, EP 0659784 B1) und als Klebemittel für verschiedene Einsatzfälle verwendet werden können (EP 0696303 B1, EP 0754731 B1, EP 0878510 B1).

Für spezielle Einsatzgebiete werden auch schmelzecarboxylierte (-maleinierte) Ethylen/Vinylacetat- (EVA) oder Ethylen/(Meth)Acrylsäureester-Copolymere (E(M)AE) eingesetzt (EP 0266994 A2, EP 0647246 B1, WO 93/01052 A1).

Des Weiteren sind Klebharzmassen unter Verwendung von in Schmelze pfropfcarboxylierten Gemischen aus einem kristallinen Polyolefin, z. B. HDPE oder LLDPE, und einem amorphen oder gering kristallinem Olefincopolymer, z. B. Ethylen/Propylen-Kautschuk (EPM) bekannt (EP 0501762 B1).

Der Nachteil der bekannten schmelzegepfropften Ethylenhomo- und -copolymere sowie pfropfmodifizierten olefinischen Elastomere besteht in ihren hohen Molmassen, die sich während der Pfropfreaktion bilden und die sich besonders bei ihrer Verwendung als Klebemittel negativ auswirken, sowie den insgesamt kostenintensiven Maßnahmen für die Entfernung von Restmonomer(en).

Die Aufgabe der vorliegenden Erfindung bestand darin - unter Vermeidung der beschriebenen Nachteile - ein Verfahren zur Herstellung eines Haftvermittlers (Klebemittels) auf Basis der Carboxylierung von Polyethylenen (HDPE, LDPE) und/oder Ethylen/ α,β-ethylenisch ungesättigten C₃- bis C₁₂-Olefin-Copolymeren (EPC, LLDPE, POE) zu entwickeln.

Gegenstand der vorliegenden Erfindung ist ein Verfahren zur Herstellung carboxylierter Ethylenpolymerblends in zwei Stufen, wonach in einer 1. Stufe in einem Fluidmischreaktor auf 100 Masseteile fest-fluides partikuläres Ethylenpolymer mit MFR (190 °C/2,16 kg Auflagegewicht) ≥ 20 g/10 min, ausgewählt unter Ethylenhomopolymeren und/oder linearen Ethylencopolymeren der Zusammensetzung ≥ 80 bis 98 Masse-% Ethylen-/2 bis ≤ 20 Masse-% C₃- bis C₁₂-Olefineinheiten, 0,05 bis 15 Masseteile einer α,β-ethylenisch ungesättigten Mono- und/oder Dicarbonsäure bzw. deren Anhydrid (Carboxylmonomer) oder einer mindestens ein Carboxylmonomer enthaltenden Monomermischung sowie 0,01 bis 10 Masseteile eines freie Radikale bildenden Initiators mit einer 1-Stunde-Halbwertszeittemperatur (T_{HW/1h}) zwischen 50 und 200 °C oder entsprechenden Initiatorgemischs hinzugefügt und bei Reaktionstemperaturen zwischen 30 und 120°C über eine Reaktionszeit zwischen 5 und 120 min pfropfpolymerisiert
und anschließend in einer 2. Stufe
100 Masseteile des in der 1. Festphasenstufe erhaltenen modifizierten Ethylenpolymers zusammen mit 150 bis 4000 Masseteilen eines unmodifizierten Ethylenpolymers oder -polymerblends mit einer Schmelzflussrate MFR (190 °C/2,16 kg Auflagegewicht) < 20 g/10 min, ausgewählt unter Ethylenhomopolymeren oder Ethylencopolymeren der Zusammensetzung ≥ 85 bis 98 Masse-% Ethylen-/2 bis ≤ 15 Masse-% C₃- bis C₁₂-Olefineinheiten oder aus LLDPE und HDPE bestehenden Compounds oder Reaktorblends, sowie 0 bis 4000 Masseteilen eines olefinischen Elastomers der Zusammensetzung 10 bis 100 Masse-% Propylen- und 0 bis 90 Masse-% einpolymerisierten Ethylen- und/oder C₄- bis C₁₂-Olefin- und/oder Dieneinheiten oder auf Basis eines Ethylencopolymers mit 10 bis 80 Masse-% einpolymerisierten Vinylacetat- oder (Meth)Acrylsäureestereinheiten über gravimetrische Dosiereinrichtungen einem Reaktionsextruder kontinuierlich zugeführt und bei Reaktionstemperaturen zwischen 160 und 260 °C umgesetzt werden und am Reaktorende das einen Carboxylierungsgrad zwischen 0,05 und 1 Masse-% besitzende pfropfmodifizierte Olefinpolymerblend kontinuierlich ausgetragen wird.

Während für den erfindungsgemäßen Carboxylierungsprozess in der 1. Stufe leichter fließende Ethylenpolymere mit MFR (190 °C/2,16 kg) ≥ 20 g/10 min, d. h. solche mit niedrigerer Molmasse M_{w} (NM_{w}), ausgewählt unter linearen Polyethylenen mit hoher Dichte (HDPE-NM_{w}) oder verzweigten Polyethylenen mit niedriger Dichte (LDPE-NM_{w}) oder linearen Ethylencopolymeren mit 2 bis maximal 20 Masse-% C₃- bis C₁₂-Olefineinheiten (LLDPE-NM_{w}, EOP-NM_{w}), eingesetzt werden, wird für die nachfolgende Schmelzepfropfstufe zusammen mit dem in der Festphasenstufe modifizierten Ethylenpolymer ein unmodifiziertes geringer fließendes Ethylenhomo- und/oder -copolymer mit MFR (190 °C/ 2,16 kg) < 20 g/10 min, d. h. ein Ethylenpolymer mit höherer Molmasse M_{w} (HM_{w}) entsprechend HDPE-HM_{w}, LDPE-HM_{W}, LLDPE-HM_{w} oder auch einem HDPE/LLDPE-Blend-HM_{w}, verwendet.

Darüber hinaus wird zumeist ein olefinisches Elastomer, ausgewählt unter den elastomeren Polypropylenen (ELPP) oder statistischen Propylencopolymeren mit 5 bis 50 Masse-% Ethylen- und/oder α,β-ethylenisch ungesättigten C₄- bis C₈-Olefin- und/oder Dieneinheiten, vorzugsweise 10 bis 25 Masse-% Ethyleneinheiten (PER), oder Ethylencopolymeren mit ≥ 20 Masse-% α,β-ethylenisch ungesättigten C₃- bis C₁₂-Olefineinheiten (EOR), vorzugsweise Propylen-, Buten-, Hexen- bzw. Methylpenten- oder Octeneinheiten, besonders bevorzugt mit 25 bis 50 Masse-% Propylen-(EPR*), Buten-1- (EBR*) oder Octen-1-Einheiten (EOR*), oder ein Ethylen/Vinylacetat- (EVA) oder ein Ethylen/(Meth)Acrylsäureester-Copolymer (E(M)AE), vorzugsweise ein Ethylencopolymer mit ≥ 15 Masse-% einpolymerisierten Butylacrylateinheiten (EBA), eingesetzt.

Für verschiedene Anwendungen als Klebemittel, vor allem wenn nicht unbedingt Haftfestigkeiten > 3 N/mm notwendig sind, kann der Zusatz des olefinischen Elastomers entfallen (spezielle Ausführungsform auf Basis von 0 Masseteilen Elastomer).

Im Unterschied zu den bekanntlich bei hohem Druck und hoher Temperatur mittels radikalischer Initiatoren hergestellten verzweigten Polyethylenen mit niedriger Dichte zwischen 0,910 und 0,940 g/cm³ (LDPE) werden die linearen Polyethylene mit hoher Dichte zwischen 0,940 und 0,965 g/cm³ (HDPE) und linearen Ethylen/< 15 Masse-% C₃- bis C₁₂-Olefin-Copolymere mit niedriger Dichte < 0,940 g/cm³ (LLDPE) im Allgemeinen mittels bekannter Technologien der koordinativen Katalyse unter Verwendung der Katalysatoren des Ziegler- bzw. Ziegler-Natta- oder Phillips-Typs erzeugt.

Dem gegenüber werden die erfindungsgemäß einsetzbaren Ethylencopolymere mit hohem C₃- bis C₁₂-Olefin-Anteil ≥ 15 Masse-% (EOP, EOR) und die aus überwiegend Propyleneinheiten zusammengesetzten Olefinelastomere, wie besonders PER, sowie elastomeren Polypropylene (ELPP) bekanntermaßen unter Verwendung spezieller Metallocen-Katalysatorsysteme hergestellt.

Die Verwendung von aus mindestens zwei unterschiedlichen Ethylen(co)polymeren bestehenden Blends, insbesondere für die Schmelzepfropfstufe, in Form von Compounds oder auch Reaktorblends, ist eine geeignete Ausführungsform des erfindungsgemäßen Verfahrens, wonach in der 2. Stufe ein Blend aus 10-90 Masse-% LDPE oder LLDPE und 90-10 Masse-% HDPE, vorzugsweise aus 20-80 Masse-% LLDPE und 80-20 Masse-% HDPE, mit einem MFR (190 °C/2,16 kg) < 20 g/10 min, dem Reaktor, vorzugsweise einem Doppelschneckenkneter (DSK), eingesetzt wird.

Das Carboxylmonomer, vorzugsweise Maleinsäureanhydrid (MSA) und/oder Acrylsäure (AS), kann auch als Mischung mit einem Comonomer aus der Gruppe der Vinylaromate, vorzugsweise Styrol, und/oder der C₁- bis C₁₂-Alkylester der Acryl- oder Methacrylsäure, vorzugsweise Methylmethacrylat (MMA) oder Methyl- (MA) oder Ethyl- (EA) oder Butylacrylat (BA), entsprechend Zusammensetzungen 99-20 Masse-% Carboxyl- und 1-80 Masse-% Comonomer, vorzugsweise 90-50 Masse-% MSA und/oder AS und 10-50 Masse-% Styrol, in der Festphasenstufe eingesetzt werden.

Die radikalisch initiierte zweistufige Pfropfung wird zwecks Erreichung ausreichender Carboxylierungsgrade sowie einer gleichmäßigen Pfropfung vorteilhaft unter Verwendung eines Radikalbildners oder vorzugsweise einer aus mindestens zwei verschiedenen Radikalbildnern bestehenden Mischung unter Verwendung organischer Peroxide mit Halbwertstemperaturen nach einer Stunde T_{HW/1h} zwischen 50 und 200 °C bzw. nach einer Minute T_{HW/1min} zwischen 85 und 250 °C (gemessen in 0,1 molarer Monochlorbenzol-Lösung), in einer auf die gesamte Ethylenpolymer-Pfropfsubstratmenge bezogenen Konzentration zwischen 0,001 und 5 Masse-%, vorzugsweise zwischen 0,02 und 2 Masse-%, durchgeführt.

Ausgewählte Beispiele für verwendbare Radikalbildner sind Dialkylperoxidicarbonate mit einer 1-Stunde-Halbwertszeittemperatur (T_{HW/1h}) zwischen 55 und 66 °C, vorzugsweise Dibutylperoxidicarbonat (DBPOC) und Dicetylperoxidicarbonat (DCPOC) mit T_{HW/1h} von 65 °C, Dilauroylperoxid (DLPO) mit T_{HW/1h} von 80 °C, Dibenzoylperoxid (DBPO) mit T_{HW/1h} von 91°C, tert.-Butylperoxy-2-ethylhexanoat (TBPEH) mit T_{HW/1h} von 91 °C, tert.-Butylperoxy-isobutyrat (TBPIB) mit T_{HW/1h} von 98 °C, 1,1-Di-(tert.-butylperoxy)-cyclohexan (DTBPC) mit T_{HW/1h} von 113 °C, tert.-Butylperbenzoat (TBPB) mit T_{HW/1h} von 122 °C, Dicumylperoxid (DCP) mit T_{HW/1h} von 132 °C, 2,5-Dimethyl-2,5-di(tert.-butylperoxy)-hexan (DHBP) mit T_{HW/1h} von 134 °C, 2,5-Dimethyl-2,5-di(tert.-butylperoxy)hexin-(3) (DYBP) mit T_{HW/1h} von 141 °C, Di-tert.-butylperoxid (TBP) mit T_{HW/1h} von 141 °C, Cumolhydroperoxid (CHP) mit T_{HW/1h} von 166 °C und tert.-Butylhydroperoxid (TBHP) mit T_{HW/1h} von 185 °C.

Eine bevorzugte Ausführungsform des Verfahrens zur Herstellung carboxylierter Ethylenpolymere bzw. Ethylencopolymerblends besteht darin, dass in der 1. Stufe auf 100 Masseteile partikuläres Ethylenpolymer mit MFR (190 °C/2,16 kg) zwischen 20 und 1000 g/10 min, ausgewählt unter einem Ethylenhomopolymer (HDPE-NM_{w}, LDPE-NM_{w}) und/oder linearem Ethylencopolymer der Zusammensetzung ≥ 90 bis 98 Masse-% Ethylen-/2 bis ≤ 10 Masse-% C₃- bis C₈-Olefineinheiten (LLDPE*-NM_{w}), 0,2 bis 12 Masseteile MSA, allein oder als Monomermischung mit 0,02 bis 6 Masseteilen Styrol, unter Zusatz von 0,05 bis 5 Masseteilen einer aus mindestens zwei radikalbildenden Initiatoren mit unterschiedlichen 1-Stunde-Halbwertszeittemperaturen (T_{HW/1h}) zwischen 50 und 120 °C sowie zwischen 120 und 180 °C bestehenden Mischung bei Reaktionstemperaturen zwischen 50 und 100 °C über eine Reaktionszeit zwischen 8 und 80 min pfropfpolymerisiert
und anschließend in der 2. Stufe
eine Mischung aus 100 Masseteilen des in der 1. Festphasenstufe erhaltenen modifizierten Ethylen(co)polymers, 180-3600 Masseteilen eines unmodifizierten Ethylenpolymers oder -polymerblends mit einem MFR (190 °C/2,16 kg) zwischen 0,1 und 20 g/10 min, ausgewählt unter Ethylenhomopolymeren (HDPE-HM_{w}, LDPE-HM_{w}) oder Ethylencopolymeren der Zusammensetzung ≥ 90 bis 98 Masse-% Ethylen-/2 bis ≤ 10 Masse-% C₃- bis C₈-Olefineinheiten (LLDPE*-HM_{w}) oder HDPE/LLDPE-Blends-HM_{w}, sowie 100-3000 Masseteilen eines aus 50 bis 75 Masse-% Ethylen- und 25 bis 50 Masse-% C₃- bis C₈-Olefineinheiten (EOR) oder aus 70 bis 100 Masse-% Propylen- und 0 bis 30 Masse-% Ethyleneinheiten bestehenden Elastomers (ELPP, PER), das mindestens ein bekanntes Stabilisationsmittel und/ oder Antioxydans enthält, kontinuierlich einem Extruder zugeführt, bei Massetemperaturen zwischen 170 und 250 °C umgesetzt und aus der Extruderdüse ein pfropfmodifiziertes Olefinpolymerblend mit einem Carboxylierungsgrad zwischen 0,1 und 0,6 Masse-% kontinuierlich ausgetragen wird.

Entsprechend dieser bevorzugten Verfahrensvariante wird mit dem olefinischen Elastomer das für das gesamte carboxylierte Ethylenpolymerblend benötigte Stabilisationsmittel/Antioxydans, in bzw. auf dem es mittels separater Mischtechnologie dispergiert worden ist, zugeführt.

Als Stabilisationsmittel und/oder Antioxydantien sind die für olefinische Polymere und Elastomere bekannten Substanzen, insbesondere primäre Antioxydantien auf Basis sterisch gehinderter Phenolverbindungen, in einer auf 100 Masseteile Olefinelastomer bezogenen Menge von 0,01 bis 5 Masseteilen, vorzugsweise von 0,1 bis 2 Masseteilen, einsetzbar. Auch Kombinationen aus jeweils mindestens einem primären und einem sekundären Antioxydans, wie z. B. Systeme aus einer sterisch gehinderten Phenol- und einer Phosphitverbindung, können verwendet werden.

Bevorzugt können die pfropfmodifizierten Ethylenpolymerblends mit einem Carboxylierungsgrad zwischen 0,05 und 1 Masse-%, vorzugsweise zwischen 0,1 und 0,6 Masse-%, als Haftvermittler und/oder Klebemittel für verschiedene Unterlagen, vorzugsweise auf und zwischen metallischen Oberflächen, verwendet werden.

Das erfindungsgemäße Verfahren wird durch nachfolgende Beispiele erläutert, ohne darauf beschränkt zu sein.

### 1. Stufe (Festphasenpfropfstufe)

### Beispiel 1

In einen temperierbaren, mit einem stufenlos regelbaren Rührer ausgerüsteten Fluidmischreaktor der Firma Reimelt Henschel werden 96,6 Masseteile eines pulverigen LLDPE mit einer Dichte von 0,920 g/cm³, einer Schmelzflussrate MFR (190 °C/2,16 kg) von 47 g/10 min und einem mittleren Teilchendurchmesser d_{T} von 0,21 mm (LLDPE-1) zusammen mit 0,16 Masseteilen Dicetylperoxidicarbonat (DCPOC), 0,47 Masseteilen 2,5-Dimethyl-2,5-di(tert.-butylperoxy)-hexan (DHBP) und 2,69 Masseteilen MSA bei einer Reaktorinnentemperatur von 20 °C vorgelegt. Danach wird in Stickstoff-Atmosphäre bei einer Rührgeschwindigkeit von 400 min⁻¹ unter gleichzeitiger Temperaturerhöhung mit einer Aufheizgeschwindigkeit von 1,2 °C/min die Reaktionsmischung dispergiert und bei Erreichung der Endreaktionstemperatur T_{R1} von 70 °C über eine Zeit t_{R1} von 60 min auf T_{R1} gehalten.

Die Festphasenreaktion wird beendet, indem das Reaktionsprodukt in den eine Temperatur von 20 °C aufweisenden Kühlmischer abgelassen wird, aus dem es für die 2. Schmelzepfropfstufe später entnommen wird (Beispiel 13).

### Beispiele 2 bis 12

Entsprechend der in Beispiel 1 beschriebenen Prozessführung werden unter Verwendung nachfolgender pulverförmiger Ethylenpolymer-Pfropfsubstrate
LLDPE-1: Dichte = 0,920 g/cm³, MFR (190°C/2,16 kg) = 47 g/10 min
LLDPE-2: Dichte = 0,915 g/cm³, MFR (190°C/2,16 kg) = 25 g/10 min HDPE-1: Dichte = 0,958 g/cm³, MFR (190°C/2,16 kg) = 38 g/10 min Ethylen/Octen-Copolymer mit C₈-Anteil von 16 Ma.-% (EOP*):
   Dichte = 0,913 g/cm³, MFR (190°C/2,16 kg) = 30 g/10 min mittels Zusatz von MSA oder AS bzw. einer MSA/Styrol(S)- oder AS/S-Mischung sowie einer Kombination aus zwei peroxidischen Initiatoren in der Festphase weitere pfropfmodifizierte Ethylen(co)polymere hergestellt.

Als Initiatoren sind DHBP, DCPOC und DLPO eingesetzt worden.

Unter Beibehaltung des gemäß Beispiel 1 angewandten Chargier- und Aufheizregimes sind als wesentliche Parameter die Reaktionsendtemperatur T_{R1} und die für T_{R1} relevante Reaktionszeit t_{R1} sowie das Monomer/Initiator-Verhältnis entsprechend den in Tabelle 1 angegebenen Beispielen variiert worden.

**Tabelle 1**

| Bspl. Nr. | Olefinpolymer [Ma.-%] | Initiator [Ma.-%] | Carboxyl-monomer [Ma.-%] | Comonomer [Ma.-%] | t_{R1} [min] | T_{R1} [°C] |
|---|---|---|---|---|---|---|
| 1 | 96,6 LLDPE-1 | 0,16 DCPOC | 2,69 MSA | - | 60 | 70 |
| | | 0,47 DHBP | | | | |
| 2 | 96,64 LLDPE-2 | 0,20 DLPO | 2,69 MSA | - | 60 | 85 |
| | | 0,47 DHBP | | | | |
| 3 | 96,7 LLDPE-2 | 0,12 DCPOC | 2,69 MSA | - | 55 | 70 |
| | | 0,47 DHBP | | | | |
| 4 | 96,68 HDPE-1 | 0,16 DLPO | 2,69 MSA | - | 55 | 85 |
| | | 0,47 DHBP | | | | |
| 5 | 95,3 HDPE-1 | 0,12 DCPOC | 2,69 MSA | 1,35 S | 60 | 68 |
| | | 0,47 DHBP | | | | |
| 6 | 95,3 LLDPE-1 | 0,17 DLPO | 2,69 MSA | 1,35 S | 50 | 90 |
| | | 0,47 DHBP | | | | |
| 7 | 88,5 LLDPE-2 | 0,22 DLPO | 9,6 MSA | - | 65 | 85 |
| | | 1,65 DHBP | | | | |
| 8 | 88,55 HDPE-1 | 0,20 DCPOC | 9,6 MSA | - | 60 | 70 |
| | | 1,65 DHBP | | | | |
| 9 | 92,1 LLDPE-1 | 0,18 DCPOC | 5,4 AS | 1,5 S | 50 | 75 |
| | | 0.82 DHBP | | | | |
| 10 | 93,5 LLDPE-1 | 0,18 DCPOC | 5,4 MSA | - | 60 | 70 |
| | | 0.92 DHBP | | | | |
| 11 | 96,64 EOP* | 0,20 DLPO | 2,69 MSA | - | 60 | 85 |
| | | 0,47 DHBP | | | | |
| 12. | 94,4 EOP* | 0,15 DCPOC | 3,6 AS | 1,2 S | 60 | 70 |
| | | 0,65 DHBP | | | | |

Tabelle 1 enthält die für die 1. Stufe wichtigen Verfahrensparameter:
- Beispiel-Nummer (Spalte 1)
- eingesetztes Ethylenpolymer (Pfropfsubstrat), in Masse-% (Ma.-%) (Spalte 2)
- Art und Konzentration der verwendeten Initiatoren, in Ma.-% (Spalte 3)
- MSA oder AS mit Konzentrationsangabe, in Ma.-% (Spalte 4)
- Styrol (S) mit Konzentrationsangabe, in Ma.-% (Spalte 5)
- Reaktionszeiten (t_{R1}), in min (Spalte 6)
- Reaktionsendtemperaturen (T_{R1}), in °C (Spalte 7)

### 2. Stufe Schmelzepfropfstufe)

### Beispiele 13 bis 27

Das in der ersten Stufe erhaltene pulverige Festphasenprodukt Bspl.-Nr. 1 wird mittels einer Dosierwaage mit einer Zufuhrgeschwindigkeit von 1,16 Masseteilen pro Stunde (MT/h) einem Doppelschneckenkneter des Typs ZSK 25 (L = 42 D; Temperaturen im Bereich von 175 bis 250 °C; Schneckendrehzahl: 300 U/min) der Firma Werner & Pfleiderer, ausgerüstet mit einer Unterwassergranulierung (UWG), zugeführt. Gleichzeitig werden über separate Waagen 5,84 MT/h LLDPE-3-Granulat (Dichte = 0,917 g/cm³; MFR (190/2,16) = 2,3 g/10 min) sowie 3,0 MT/h granulares Propylen/Ethylen(20 Masse-%)-Elastomer mit einer Volumenschmelzflussrate MVR (190/2,16) von 1,2 cm³/10 min (PER*), dem zuvor 0,88 Masse-% Irganox 1330 (Hersteller: Ciba) beigemischt worden sind, zudosiert.

Entsprechend o. a. Masseverhältnis zwischen dem Festphasenpfropfprodukt, LLDPE-3-Granulat und PER* erfolgt die reaktive Extrusion bei einem mittleren Durchsatz von 10 MT/h.

Der aus der Extruderdüse mit einer Temperatur T_{M} von 207 °C austretende Produktstrang wird mittels UWG abgeschlagen. Nach Trocknung des Granulates werden folgende Kennwerte ermittelt (Beispiel 13):
MFR (190 °C/5 kg) = 2,7 g/10 min und
Maleinierungsgrad CS*ₑₓ* = 0,25 Masse-%

In der 2. Pfropfstufe werden außer den in der 1. Stufe pfropfmodifizierten Ethylenpolymeren nachfolgende Ethylenpolymer-Pfropfsubstrate:
- LLDPE-3 mit Dichte = 0,917 g/cm³ und MFR (190/2,16) = 2,3 g/10 min
- LLDPE-4 mit Dichte = 0,922 g/cm³ und MFR (190/2,16) = 4,9 g/10 min
- HDPE-2 mit Dichte = 0,962 g/cm³ und MFR (190/2,16) = 0,5 g/10 min
- PE-Blend (Reaktorblend der Zusammensetzung: 40 Ma.-% LLDPE und 60 Ma.-% HDPE) mit MFR (190/2,16) = 0,8 g/10 min
sowie nachfolgende Olefinelastomere (jeweils 0,88 Masse-% Irganox 1330 enthaltend) eingesetzt:
- PER* mit Dichte = 0,855 g/cm³ und MVR (190/2,16) von 1,2 cm³/10 min
- EOR*-1 mit Dichte = 0,868 g/cm³ und MFR (190/2,16) von 0,5 g/10 min
- EOR*-2 mit Dichte = 0,870 g/cm³ und MFR (190/2,16) von 5 g/10 min.

In Tabelle 2 sind aufgeführt:

| | |
|---|---|
| Spalte 1: | Beispiel-Nummer |
| Spalte 2: | Konzentration an eingesetztem Festphasenpfropfprodukt mit Angabe der entsprechenden Bspl.-Nr./Tabelle 1, in Masseteile pro Stunde [MT/h] |
| Spalte 3: | Art und Konzentration an eingesetztem LLDPE-HM_{w}, HDPE-HM_{w} oder LLDPE/HDPE-Blend-HM_{w} (PE-HM_{w}), in [MT/h] |
| Spalte 4: | Art und Konzentration an eingesetztem Olefinelastomer in [MT/h] |
| Spalte 5: | an ZSK-Düse gemessene mittlere Massetemperatur (T_{M}), in [°C] |
| Spalte 6: | Schmelzflussrate MFR (190 °C/5 kg), in g/10 min [g/10'] |
| Spalte 7: | Gepfropfter Carbonsäuregehalt (CSₑₓ), in Masse-% [Ma.-%] |
| Spalte 8: | Haft- bzw. Schälfestigkeit (peel strength), in [N/mm] |

Der gepfropfte MSA- oder AS-Gehalt CSₑₓ, d. h. der Pfropfgrad (auch als Carboxylierungs- oder bei der MSA-Pfropfung als Maleinierungsgrad bezeichnet) ist mittels Rücktitration der durch den Anteil an Carbonsäure (MSA oder AS) nicht neutralisierten Kalilauge wie folgt bestimmt worden:
Nach Behandlung über 6 h bei 80 °C des im siedenden Methanol erhaltenen Rückstandes einer 2 g-Pfropfproduktprobe mit einer Mischung aus 100 ml wassergesättigtem Xylol und 20 ml 0,1-molarer methanolischer Kalilauge - nach Zugabe einiger Tropfen einer 1 %-igen methanolischen Phenolphthaleinlösung - Titration mit 0,1-molarer Salzsäure.

Die Schmelzflussraten MFR (190 °C/5 kg Auflagegewicht) sind nach ISO 1133 ermittelt worden.

In Tabelle 2 sind die Schmelzepfropf-Parameter sowie die erhaltenen MFR- und CSₑₓ-Werte für die aus den oben genannten Komponenten bestehenden carboxylierten Ethylen(co)polymer-Systeme angeführt.

Darüber hinaus ist in Tabelle 2 ein Kennwert für die Haftfestigkeit (modifizierte Schälfestigkeit, *peel strength*) als die für die Bewertung der erfindungsgemäßen carboxylierten Ethylencopolymerblends wesentliche Eigenschaft angegeben.

**Tabelle 2**

| Bspl. | Extruder-Fahrweise | | | | Kennwerte | | |
|---|---|---|---|---|---|---|---|
| Nr. | Festphasen-produkt-Tab.1 [MT/h] | PE-HM_{w} [MT/h] | Olefin-elastomer [MT/h] | T_{M} [°C] | MFR (190/5) [g/10'] | CSₑₓ [Ma.-%] | Schälfestigkeit [N/mm] |
| 13 | 1,16 Nr.1 | 5,84 LLDPE-3 | 3,0 PER* | 207 | 2,7 | 0,25 | 7,2 |
| Vgl. 13A | - | 6,94 LLDPE-3 + 0,05 MSA + 0,01 DHBP | 3,0 PER* | 207 | 0,2 | 0.20 | 3,1 |
| 14 | 1,16 Nr.2 | 5,84 LLDPE-4 | 3,0 EOR*-1 | 215 | 5,5 | 0,26 | 7,0 |
| 15 | 1,4 Nr.3 | 7,0 HDPE-2 | 3,6 EOR*-2 | 215 | 2,6 | 0,27 | 6,8 |
| Vgl. 15A | - | 8,33 HDPE-2 + 0,06 MSA + 0,01 DHBP | 3,6 EOR*-2 | 216 | nicht meßbar (fließt nicht) | 0,22 | 3,0 |
| 16 | 1,16 Nr.4 | 5,84 PE-Blend | 3,0 PER* | 219 | 4,7 | 0,24 | 7,8 |
| 17 | 2,5 Nr.4 | 7,5 LLDPE-4 | 3,0 EOR*-2 | 212 | 4,1 | 0,27 | 6,4 |
| 18 | 2,5 Nr.4 | 4,5 PE-Blend | 3,0 PER* | 210 | 6,7 | 0,23 | 7,9 |
| Vgl. 18A | - | 6,94 PE-Blend + 0,05 MSA + 0,012 DHBP | 3,0 PER* | 212 | nicht meßbar (fließt nicht) | 0,18 | 4,1 |
| 19 | 1,16 Nr.5 | 5,84 HDPE-2 | 3,0 PER* | 224 | 1,0 | 0,27 | 6,2 |
| 20 | 1,4 Nr.6 | 7,0 LLDPE-4 | 3,6 PER* | 212 | 5,6 | 0,23 | 6,0 |
| 21 | 0,3 Nr.7 | 6,7 LLDPE-3 | 3,0 EOR*-1 | 210 | 2,5 | 0,21 | 4,6 |
| 22 | 0,36 Nr.8 | 8,04 PE-Blend | 3,6 EOR*-1 | 212 | 1,6 | 0,23 | 4,8 |
| Vgl. 22A | - | 6,94 PE-Blend + 0,05 MSA + 0,01 DHBP | 3,0 EOR*-1 | 212 | nicht meßbar (fließt nicht) | 0,17 | 3,1 |
| 23 | 0,8 Nr.8 | 6,7 PE-Blend | 2,5 EOR*-2 | 220 | 2,1 | 0.61 | 6,1 |
| 24 | 1,74 Nr.9 | 8,76 HDPE-2 | 4,5 PER* | 210 | 1,5 | 0,37 | 3,5 |
| 25 | 1,16 Nr.10 | 5,84 LLDPE-4 | 3,0 EOR*-1 | 209 | 2,8 | 0,49 | 6,2 |
| 26 | 2,5 Nr.11 | 7,5 LLDPE-3 | 3,0 EOR*-2 | 207 | 2,2 | 0,23 | 5,4 |
| 27 | 1,16 Nr.12 | 5,84 PE-Blend | 3,0 PER* | 210 | 3,6 | 0,33 | 3,8 |

Zum Vergleich sind in Tabelle 2 - ohne Vorlage eines in der Festphase gepfropften Ethylen(co)polymers - vier allein in der Schmelze hergestellte pfropfcarboxylierte Ethylen(co)polymere mitangeführt (Beispiele Vgl.13A, Vgl.15A, Vgl.18A und Vgl.22A), wobei im Unterschied zu den erfindungsgemäßen Beispielen anstelle des in der 1. Stufe hergestellten Pfropfproduktes in den Extrudereinzug das MSA und der Initiator DHBP, eingemischt in einem Teil des jeweils verwendeten PE-HM_{w}, zugeführt wird. Demnach sind gemäß Bspl.-Vgl.13A über die erste Waage eine Mischung aus 1,10 MT/h LLDPE-3, 0,05 MT/h MSA und 0.01 MT/h DHBP und über eine zweite Waage 5,84 MT/h reines LLDPE-3 zugeführt worden. Entsprechend ist bei den drei anderen Vergleichsbeispielen verfahren worden.

Als Haftfestigkeits-Kennwert ist die in einer Material-Prüfmaschine TC-FR010TH.A5V der Firma Zwick GmbH & Co. an eingespannten Proben aus Aluminiumblechstreifen/0,3 mm Haftvermittler-Folie/Aluminiumblechstreifen-Verbunden (AI/HV/AI) mit einer Zuggeschwindigkeit von 100 mm/min ermittelte Schälfestigkeit verwendet worden.

Die mittels UWG erhaltenen Granulate werden nach ihrer Trocknung zu 0,3 mm dicken Folien extrudiert, in Streifen mit einer Länge von 80 mm und einer Breite von 40 mm geschnitten und zwischen zwei Al-Streifen mit gleicher Dimension gelegt. Anschließend erfolgt in einem Wärmeschrank bei 180 °C eine Temperung der AI/HV/AI-Verbunde, die daraufhin nach verschiedenen Lagerzeiten im Wärmeschrank ohne zusätzliche Gewichtsauflage und Druck vermessen werden.

Die Messung wird nach einer Lagerzeit von 8 min an den jeweils in drei geschnittenen (13,3 x 80) mm-AI/HV/AI-Probestreifen durchgeführt. Die in Tabelle 2 angegebenen Schälfestigkeiten sind die aus jeweils vier AI/HV/AI-Verbunden (und somit aus insgesamt 12 Probestreifen-Einzelwerten) für ein getestetes Klebemittel erhaltenen Durchschnittswerte.

Wie der Vergleich der Pfropfprodukt-Kennwerte in der Gegenüberstellung mit den reinen Schmelzecarboxylierungsprodukten (Bspl. Vgl.13A, 15A,18A und 22A) zeigt, zeichnen sich die erfindungsgemäß hergestellten carboxylierten Ethylenpolymerblends durch hohe Haftfestigkeiten (Schälfestigkeiten) bei gleichzeitig für die Verwendung gut geeigneten Schmelzviskositäten entsprechend MFR (190 °C/5 kg)-Werten zwischen 1 und 7 g/10 min aus.

Darüber hinaus ist besonders hervorzuheben, dass die hohen Schälfestigkeiten dieser neuen Haftvermittler auch nach längerer Temperung erhalten bleiben. Dieses auf der erfindungsgemäßen zweistufigen Festphasen-/Schmelzepfropfcarboxylierung basierende Ergebnis konnte nicht erwartet werden.

## Patentansprüche

1. Verfahren zur Herstellung carboxylierter Ethylenpolymerblends, **dadurch gekennzeichnet, dass** in einer 1. Stufe in einem Fluidmischreaktor auf 100 Masseteile festfluides partikuläres Ethylenpolymer mit MFR (190 °C/2,16 kg Auflagegewicht) ≥ 20 g/10 min, ausgewählt unter Ethylenhomopolymeren (HDPE-NM_{w}, LDPE-NM_{w}) und/oder linearen Ethylencopolymeren der Zusammensetzung ≥ 80 bis 98 Masse-% Ethylen-/2 bis ≤ 20 Masse-% C₃- bis C₁₂-Olefineinheiten (LLDPE-NM_{w}, EOP-NM_{w}), 0,05 bis 15 Masseteile einer α,β-ethylenisch ungesättigten Mono- und/oder Dicarbonsäure bzw. deren Anhydrid (Carboxylmonomer) oder einer mindestens ein Carboxylmonomer enthaltenden Monomermischung sowie 0,01 bis 10 Masseteile eines freie Radikale bildenden Initiators mit einer 1-Stunde-Halbwertszeittemperatur (T_{HW/1h}) zwischen 50 und 200 °C oder entsprechenden Initiatorgemischs hinzugefügt und bei Reaktionstemperaturen zwischen 30 und 120 °C über eine Reaktionszeit zwischen 5 und 120 min pfropfpolymerisiert und anschließend in einer 2. Stufe 100 Masseteile des in der 1. Festphasenstufe erhaltenen modifizierten Ethylenpolymers zusammen mit 150 bis 4000 Masseteilen eines unmodifizierten Ethylenpolymers oder -polymerblends mit einer Schmelzflussrate MFR (190 °C/2,16 kg Auflagegewicht) < 20 g/10 min, ausgewählt unter Ethylenhomopolymeren (HDPE-HM_{w}, LDPE-HM_{W}) oder Ethylencopolymeren der Zusammensetzung ≥ 85 bis 98 Masse-% Ethylen-/2 bis ≤ 15 Masse-% C₃- bis C₁₂-Olefineinheiten (LLDPE-HM_{w}) oder aus LLDPE und HDPE bestehenden Compounds oder Reaktorblends (HDPE/LLDPE-Blend-HM_{w}), sowie 0 bis 4000 Masseteilen eines olefinischen Elastomers der Zusammensetzung 10 bis 100 Masse-% Propylen- und 0 bis 90 Masse-% einpolymerisierten Ethylen- und/oder C₄- bis C₁₂-Olefin- und/oder Dieneinheiten oder auf Basis eines Ethylencopolymers mit 10 bis 80 Masse-% einpolymerisierten Vinylacetat- (EVA) oder (Meth)Acrylsäureestereinheiten (E(M)AE) über gravimetrische Dosiereinrichtungen einem Reaktionsextruder kontinuierlich zugeführt und bei Reaktionstemperaturen zwischen 160 und 260 °C umgesetzt werden und am Reaktorende das einen Carboxylierungsgrad zwischen 0,05 und 1 Masse-% besitzende pfropfmodiizierte Olefinpolymerblend kontinuierlich ausgetragen wird.

2. Verfahren zur Herstellung carboxylierter Ethylenpolymerblends nach Anspruch 1, **dadurch gekennzeichnet, dass** als Carboxylmonomer Maleinsäureanhydrid (MSA) und/oder Acrylsäure (AS) oder deren Mischung mit einem Comonomer aus der Gruppe der Vinylaromaten, vorzugsweise Styrol, und/oder der C₁- bis C₁₂-Alkylester der Acryl- oder Methacrylsäure, vorzugsweise Methylmethacrylat (MMA) oder Methyl- (MA) oder Ethyl- (EA) oder Butylacrylat (BA), entsprechend Zusammensetzungen 99 bis 20 Masse-% Carboxylmonomer/1 bis 80 Masse-% Comonomer, vorzugsweise 90 bis 50 Masse-% MSA und/oder AS/10 bis 50 Masse-% Styrol, in der Festphasenstufe eingesetzt werden.

3. Verfahren nach den Ansprüchen 1 und 2, **dadurch gekennzeichnet, dass** in der 1. Stufe auf 100 Masseteile partikuläres Ethylenpolymer mit MFR (190 °C/2,16 kg) zwischen 20 und 1000 g/10 min, ausgewählt unter einem Ethylenhomopolymer (HDPE-NM_{w}, LDPE-NM_{w}) und/oder linearem Ethylencopolymer der Zusammensetzung ≥ 90 bis 98 Masse-% Ethylen-/2 bis ≤ 10 Masse-% C₃- bis C₈-Olefin-einheiten (LLDPE*-NM_{w}), 0,2 bis 12 Masseteile MSA, allein oder als Monomermischung mit 0,02 bis 6 Masseteilen Styrol, unter Zusatz von 0,05 bis 5 Masseteilen einer aus mindestens zwei radikalbildenden Initiatoren mit unterschiedlichen 1-Stunde-Halbwertszeittemperaturen (T_{HW/1h}) zwischen 50 und 120 °C sowie zwischen 120 und 180 °C bestehenden Mischung bei Reaktionstemperaturen zwischen 50 und 100 °C über eine Reaktionszeit zwischen 8 und 80 min pfropfpolymerisiert und anschließend in der 2. Stufe
eine Mischung aus 100 Masseteilen des in der 1. Festphasenstufe erhaltenen modifizierten Ethylen(co)polymers, 180-3600 Masseteilen eines unmodifizierten Ethylenpolymers oder-polymerblends mit einem MFR (190 °C/2,16 kg) zwischen 0,1 und 20 g/10 min, ausgewählt unter Ethylenhomopolymeren (HDPE-HM_{w}, LDPE-HM_{W}) oder Ethylencopolymeren der Zusammensetzung ≥ 90 bis 98 Masse-% Ethylen-/2 bis ≤ 10 Masse-% C₃- bis C₈-Olefineinheiten (LLDPE*-HM_{w}) oder HDPE/LLDPE-Blends-HM_{w}, sowie 100-3000 Masseteilen eines aus 50 bis 75 Masse-% Ethylen- und 25 bis 50 Masse-% C₃- bis C₈-Olefineinheiten (EOR) oder aus 70 bis 100 Masse-% Propylen- und 0 bis 30 Masse-% Ethylen- und/oder C₄- bis C₈-Olefineinheiten bestehenden Elastomers (ELPP, PER), das mindestens ein bekanntes Stabilisationsmittel und/oder Antioxydans enthält, kontinuierlich einem Extruder zugeführt, bei Massetemperaturen zwischen 170 und 250 °C umgesetzt und aus der Extruderdüse ein pfropfmodifiziertes Olefinpolymerblend mit einem Carboxylierungsgrad zwischen 0,1 und 0,6 Masse-% kontinuierlich ausgetragen wird.

4. Verfahren nach Anspruch 3, **dadurch gekennzeichnet, dass** das olefinische Elastomer ein in einem separaten Mischungsschritt hinzugefügtes primäres Antioxydans, vorzugsweise eine Verbindung aus der Gruppe der sterisch gehinderten Phenole, oder eine Kombinationen aus jeweils mindestens einem primären und einem sekundären Antioxydans, vorzugsweise aus einem eine sterisch gehinderte Phenol- und eine Phosphitverbindung enthaltenden System, in einer auf 100 Masseteile Olefinelastomer bezogenen Menge von 0,01 bis 5 Masseteilen enthält.

## Claims

1. Procedure for the manufacture of carboxylated ethylene polymer blends, **characterized by** in a 1 step, in a fluid mixing reactor, adding to 100 parts by weight (pbw) of solid-fluid particulate ethylene polymer - with an MFR (190°C/2.16 kg load weight) ≥ 20 g/10 min, chosen from among ethylene homopolymers (HDPE-NMₓ, LDPE-NM_{w}) and/or linear ethylene copolymers of composition ≥ 80-98 wt.-% ethylene/2 to ≤ 20 wt.-% C₃₋₁₂-olefin units LLDPE-NM_{w}, EOP-NM_{w}) - 0.05-15 pbw of an α,β-ethylenically unsaturated mono and/or dicarboxylic acid or its anhydride (carboxyl monomer), or a monomer mixture containing at least one carboxyl monomer and 0.01-10 pbw of a free radical-forming initiator with a 1 h half-time temperature (T_{HW/1h}) of 50-200°C, or adding a corresponding initiator mixture, and graft-polymerizing at reaction temperatures of 30-120°C for 5-120 min and subsequently,
in a 2^{nd} step, continuously feeding into a reaction extruder 100 pbw of the modified ethylene polymer obtained in the 1^{st}, solid phase step - together with 150-4,000 pbw of an unmodified ethylene polymer or polymer blend with a MFR (190°C12,16 kg load weight) of < 20 g/10 min, chosen from among ethylene homopolymers (HDPE-HM_{w}, LDPE-HM_{w}), or ethylene copolymers of composition ≥ 85-98 wt.-% ethylene/2 to ≤ 15 wt.-%C₃₋₁₂-olefin units (LLDPE-HM_{w},), or compounds or reactor blends consisting of LLDPE and HDPE (HDPE/LLDPE-blend-HM_{w}), as well as 0-4,000 pbw of an olefinic elastomer of composition 10-100 wt.-% propylene and 0-90 wt.-% polymerized-in ethylene and/or C₄₋₁₂-olefin and/or diene units, or based on an ethylene copolymer with 10-80 wt.-% polymerized-in vinyl acetate (EVA) or (meth)acrylic acid ester units (E(M)AE) - via gravimetric dosing devices, into a reaction extruder and reacting at temperatures of 160-260°C such that at the reactor end a graft-modified olefin polymer blend with a carboxylation degree of 0.5-1 wt.-% is continuously discharged.

2. Procedure for the manufacture of carboxylated ethylene polymer blends according to claim 1, **characterized by** using maleic acid anhydride (MSA) and/or acrylic acid (AS) or their mixtures as carboxyl monomer, with a comonomer from the group of vinyl aromatics, preferably styrene, and/or the C₁₋₁₂-alkyl esters of acrylic or methacrylic acid, preferably methyl methacrylate (MMA), or methyl (MA) or ethyl (EA) or butyl acrylate (BA), of composition 99-20 wt.-% carboxyl monomer/1-80 wt.-% comonomer, preferably 90-50 wit.-% MSA and/or AS/10-50 wt.-% styrene, in the solid phase step.

3. Procedure according to claims 1 and 2, **characterized by** graft polymerizing in the 1^{st} step, for 100 pbw particulate ethylene polymer - with MFR (190°C/2.16 kg) of 20-1000 g/10 min, chosen from an ethylene homopolymer (HDPE-NM_{w}, LDPE-NM_{w}) and/or a linear ethylene copolymer of composition ≥ 90-98 wit.-% ethylene/2 to ≤ 10 wt.-% C₃₋₈-olefin units (LLDPE*-NM_{w}) - 0.2-12 pbw MSA, alone or as monomer mixture with 0.02-6 pbw styrene, under addition of 0.05-5 pbw of a mixture consisting of at least two radical-forming initiators with different half-time temperatures (T_{HW/1h}) of 50-120°C and of 120-180°C, at reaction temperatures of 50-100°C, for a reaction time of 8-80 min and subsequently,
in a 2^{nd} step, continuously feeding into an extruder a mixture of 100 pbw of the modified ethylene (co)polymer obtained in the 1^{st} step, 180-3600 pbw of an unmodified ethylene polymer or polymer blend with an MFR (190°C/2.16 kg) of 0.1-20 g/10 min, chosen from among ethylene homopolymers (HDPE-HM_{w}, LDPE-HM_{w}) or ethylene copolymers of composition ≥ 90-98 wt.-% ethylene/2 to ≤ 10 wt.-% C₃₋₈-olefin units (LLDPE*-HM_{w}), or HDPE/LLDPE-blends, as well as 100-3,000 pbw of an elastomer (ELPP, PER) consisting of 50-75 wt.-% ethylene and 25-50 wt.-% C₃₋₈-olefin units (EOR), or of 70-100 wt.-% propylene and 0-30 wt.-% ethylene and/or C₄₋₈-olefin units that contains at least one known stabilization agent and/or antioxidant, reacting
at mass temperatures of 170-250°C and continuously taking from the extruder jet a graft-modified olefin polymer blend with a degree of carboxylation of 0.1-0.6 wit.-%.

4. Procedure according to claim 3, **characterized by** the olefinic elastomer containing a primary antioxidant added in a separate mixing step, preferably a compound from the group of sterically hindered phenols, or a combination of in each case at least one primary and one secondary antioxidant, preferably of a system containing a sterically hindered phenolic compound and a phosphite compound, in an amount of 0.01-5 pbw relative to 100 pbw olefin elastomer.

## Revendications

1. Procédé pour la production d'alliages de polymères d'éthylène carboxylés, **caractérisé en ce que** dans une 1^{ère} étape on ajoute dans un réacteur mélangeur de fluides, pour 100 parties en masse de polymère d'éthylène particulaire solide-liquide à IFC (190 °C/charge de 2,16 kg) ≥ 20 g/10 min, choisi parmi des homopolymères d'éthylène (HDPE-NM_{w}, LDPE-NM_{w}) et/ou des copolymères d'éthylène linéaires de composition ≥ 80 à 98 % en masse d'éthylène/2 à ≤ 20 % en masse de motifs oléfiniques en C₃-C₁₂ (LLDPE-NM_{w}, EOP-NM_{w}), 0,05 à 15 parties en masse d'un acide mono- et/ou dicarboxylique à insaturation α,β-éthylénique ou d'un anhydride d'un tel acide (monomère carboxylique) ou d'un mélange de monomères contenant au moins un monomère carboxylique, ainsi que 0,01 à 10 parties en masse d'un amorceur générateur de radicaux libres, ayant une température de demi-vie d'une heure (T_{HW/1h}) comprise 50 et 200 °C ou d'un mélange d'amorceurs correspondant, et on les polymérise par greffage pendant un temps de réaction compris entre 5 et 120 minutes, à des températures de réaction comprises entre 30 et 120 °C, et ensuite dans une 2^{e} étape
on envoie en continu à une extrudeuse de réaction, au moyen de dispositifs doseurs gravimétriques, 100 parties en masse du polymère d'éthylène modifié, obtenu dans la 1^{ère} étape en phase solide, conjointement avec 150 à 4 000 parties en masse d'un polymère ou mélange de polymères d'éthylène non modifié, ayant un indice de fluidité à chaud IFC (190 °C/charge de 2,16 kg) < 20 g/10 min, choisi parmi des homopolymères d'éthylène (HDPE-HM_{w}, LDPE-HM_{W}) ou des copolymères d'éthylène de composition ≥ 85 à 98 % en masse d'éthylène/2 à ≤ 15 % en masse de motifs oléfiniques en C₃-C₁₂ (LLDPE-HM_{w}) ou de compounds consistant en LLDPE et HDPE ou d'alliages en réacteur (HDPE/LLDPE-Blend-HM_{w}), ainsi que 0 à 4 000 parties en masse d'un élastomère oléfinique de composition 10 à 100 % en masse de motifs propylène et 0 à 90 % en masse de motifs éthylène et/ou oléfine en C₄-C₁₂ et/ou diène incorporés par polymérisation ou à base d'un copolymère d'éthylène avec 10 à 80 % en masse de motifs acétate de vinyle (EVA) ou ester d'acide (méth)acrylique (E(M)AE) incorporés par polymérisation, et on les fait réagir à des températures de réaction comprises entre 160 et 260 °C et à l'extrémité du réacteur on décharge en continu l'alliage de polymères oléfiniques modifié par greffage, ayant un degré de carboxylation compris entre 0,05 et 1 % en masse.

2. Procédé pour la production d'alliages de polymères d'éthylène carboxylés selon la revendication 1, **caractérisé en ce qu'**on utilise comme monomère carboxylique dans l'étape en phase solide l'anhydride maléique (MSA) et/ou l'acide acrylique (AS) ou un mélange de ceux-ci avec un comonomère choisi dans le groupe des composés vinylaromatiques, le styrène de préférence, et/ou des esters alkyliques en C₁-C₁₂ de l'acide acrylique ou méthacrylique, de préférence le méthacrylate de méthyle (MMA) ou l'acrylate de méthyle (MA) ou d'éthyle (EA) ou de butyle (BA), correspondant à des compositions de 99 à 20 % en masse de monomère carboxylique/1 à 80 % en masse de comonomère, de préférence de 90 à 50 % en masse de MSA et/ou AS/10 à 50 % en masse de styrène.

3. Procédé selon les revendications 1 et 2, **caractérisé en ce que** dans la 1^{ère} étape on polymérise par greffage pendant un temps de réaction compris entre 8 et 80 minutes, à des températures de réaction comprises entre 50 et 100 °C, pour 100 parties en masse de polymère d'éthylène particulaire à IFC (190 °C/2,16 kg) compris entre 20 et 1 000 g/10 min, choisi parmi un homopolymère d'éthylène (HDPE-NM_{w}, LDPE-NM_{w}) et/ou un copolymère d'éthylène linéaire de composition ≥ 90 à 98 % en masse d'éthylène/2 à ≤ 10 % en masse de motifs oléfiniques en C₃-C₈ (LLDPE*-NM_{w}), 0,2 à 12 parties en masse de MSA, seul ou sous forme de mélange de monomères avec 0,02 à 6 parties en masse de styrène, avec addition de 0,05 à 5 parties en masse d'un mélange constitué d'au moins deux amorceurs générateurs de radicaux, ayant différentes températures de demi-vie d'une heure (T_{HW/1h}) comprises entre 50 et 120 °C ainsi qu'entre 120 et 180 °C, et ensuite dans la 2^{e} étape
on envoie en continu à une extrudeuse 100 parties en masse du (co)polymère d'éthylène modifié, obtenu dans la 1^{ère} étape en phase solide, 180 - 3 600 parties en masse d'un polymère ou mélange de polymères d'éthylène non modifié, ayant un IFC (190 °C/charge de 2,16 kg) compris entre 0,1 et 20 g/10 min, choisi parmi des homopolymères d'éthylène (HDPE-HM_{w}, LDPE-HM_{w}) ou des copolymères d'éthylène de composition ≥ 90 à 98 % en masse d'éthylène/2 à ≤ 10 % en masse de motifs oléfiniques en C₃-C₈ (LLDPE*-HM_{w}) ou HDPE/LLDPE-Blends-HM_{w}, ainsi que 100 - 3 000 parties en masse d'un élastomère constitué de 50 à 75 % en masse de motifs éthylène et 25 à 50 % en masse de motifs oléfiniques en C₃-C₈ (EOR) ou de 70 à 100 % en masse de motifs propylène et 0 à 30 % en masse de motifs éthylène et/ou oléfine en en C₄-C₈ (ELPP, PER), qui contient au moins un stabilisant connu et/ou un antioxydant connu, on les fait réagir à des températures de masse comprises entre 170 et 250 °C et on décharge en continu de la filière de l'extrudeuse un alliage de polymères oléfiniques modifié par greffage, ayant un degré de carboxylation compris entre 0,1 et 0,6 % en masse.

4. Procédé selon la revendication 3, **caractérisé en ce que** l'élastomère oléfinique contient un antioxydant primaire ajouté dans une étape de mélange distincte, de préférence un composé choisi dans le groupe des phénols à empêchement stérique, ou une association de chacun au moins un antioxydant primaire et un antioxydant secondaire, de préférence consistant en un système contenant un composé de type phosphite et un composé de type phénol à empêchement stérique, en une proportion de 0,01 à 5 parties en masse pour 100 parties en masse d'élastomère oléfinique.
